# EUROPEAN PATENT APPLICATION

(11) **EP 2 527 383 A1**
(43) Date of publication of application: **28.11.2012**
(21) Application number: 11167829.8
(22) Date of filing: 27.05.2011
(51) Int. Cl.: C08G 18/12, C08G 18/66, C08G 18/67, C08G 18/76, C09D 175/16, C08G 18/40

(54) **A process to manufacture thick layers of radiation cured adhesives**

(71) Applicant: Henkel AG & Co. KGaA, 40589 Düsseldorf (DE)
(72) Inventor: Davis, Riju, 40593 Düsseldorf (DE)

(57) **Abstract**

The invention relates to a process to manufacture an adhesive layer in an easy to handle process, whereby the adhesive is applied in a molten state to a substrate in an amount to form a layer of 150 to 5000 µm and the adhesive is cured by UV-radiation whereby the adhesive comprises a polyurethane bearing at least one unsaturated curable group in the chain and the radiation source is preferably an UV-LED.

## Description

The invention relates to the manufacture of layers of radiation curable adhesives, which shall be applied in a thick layer and are cross-linked by radiation. The invention further relates to layers of pressure sensitive adhesives based on PU-prepolymers containing acrylate-groups.

Printable adhesive for UV-curing are known. They comprise unsaturated monomers or oligomers, e.g. based on methacrylates. The viscosity is typically low and so the adhesive can be printed and cured thereafter by radiation. Such liquid adhesives can only applied in thin layers otherwise the layer applied will flow and change its form. So films with varying properties are obtained.

On the other hand it is not possible to prepare thick layers of adhesives being cured by radiation, as it is known, that the deeper parts of the layer cannot be fully cured by radiation. The UV-light penetration decreases strongly with the depth of the layer. So the cross-linking in the deeper parts of the layer is not sufficient which results in an adhesive layer with only low cohesion stability. The attempt to increase the radiation intensity by a higher intensity of the UV-source is difficult, as such lamps usually emit a high portion of the energy as heat. This may influence the integrity of the coating or adhesive and the substrates of the layers. Thick layers of adhesives are required for bonding uneven surfaces. The adhesive should be flexible and adhere to the whole surface to improve the force. Examples of such substrates are wood, paper blocks, ceramics or bricks and concrete.

Printable adhesives based on acrylic monomers and oligomers are disclosed in EP 1539896. The products comprise mixtures of methacrylic oligomers and unsaturated monomers including an amount of free radical photoinitiators. The adhesive is applied as layers of up to 50 µm which are cured by UV radiation. So a typical UV-curing system is disclosed. Such compositions cannot be applied in thick layers, as the curing energy of UV- lamps is not sufficient to cure also the deeper parts of a thick layer.

GB 2283748 discloses UV cross-linkable systems. The adhesive comprises acrylate monomers and urethane acrylates and an initiator. The adhesive is applied in about 15 µm layer by a UV source at about 300 W/inch. No cured adhesive layers are disclosed having a high thickness of the coating.

DE 19937341 discloses hot melt adhesives which can be applied in a molten state. The adhesive shall comprise reactive NCO-groups and unsaturated groups. So the adhesive comprises a fast cross-linking reaction by radiation and the slow reaction by the NCO-curing. NCO containing adhesives are difficult to handle due to its reactivity with water and to the health constraints against isocyanates.

It is the object of the present invention to provide a solid adhesive layer which shall be cross-linked by UV radiation. This layer shall be applied as thick layer to a substrate and shall be cured also at the lower parts of the adhesive. The adhesive to be applied shall be free of isocyanate groups.

Another object of the invention is to provide a process to obtain a cured layer of a hot melt adhesive. This process shall be suitable for book binding or for preparation of adhesive layers on flat and flexible substrates like tapes or films.

The object is solved by a process to manufacture an adhesive layer, whereby the adhesive is applied in a molten state to a substrate in an amount to form a layer of 150 to 5000 µm, the adhesive is cured by UV-radiation characterized in that the adhesive comprises a polyurethane having at least one unsaturated curable group.

Another object of the invention is an adhesive layer in which the adhesive comprises a polyurethane having at least one unsaturated polymerizable group, the backbone of the polyurethane comprises 2 to 4 arms and as average less than 25 % of the arms are non reactive, characterized in that the layer has a thickness of 150 to 5000 µm and is cured by UV-radiation.

The adhesive layer according to the invention shall show a high bonding strength. It is required to perform its adhesive strength that the cured adhesive shall have an elevated cohesive strength. This is achieved by a polyurethane polymer backbone which provides internal flexibility, good adhesion and an improved cohesion to the adhesive layer. Additionally the cohesion is improved by cross-linking the adhesive after application by radiation, preferably UV radiation.

The adhesive material is provided as hot melt adhesive, so a polyurethane backbone can be used having a high molecular weight. The adhesive is solvent free. The PU-polymer shall contain at least one radiation cross-linkable group, the PU polymer being produced from a reactive polyurethane prepolymer with at least two NCO groups, a portion of the NCO groups being reacted with low molecular weight compounds which contain free-radically cross-linkable double bonds together with a group reactive towards NCO groups, and a portion of the NCO groups being reacted with monofunctional compounds which comprise no polymerizable groups. The hot-melt adhesive additionally contains at least one free-radical photoinitiator which is present mixed in the adhesive.

The hot-melt adhesive according to the invention substantially comprises a PU polymer which comprises terminal radiation-crosslinking reactive double bonds. The PU polymer shall furthermore comprise free, non-crosslinkable polymer chain ends. The PU polymer shall be produced from an NCO-reactive polyurethane prepolymer.

The PU prepolymer as the basis for the further reactions is produced by reacting diols and/or triols with di- or tri-isocyanate compounds. The quantity ratios are selected such that terminally NCO-functionalized prepolymers are obtained. In particular, the prepolymers should be linear, i.e. predominantly produced from diols and diisocyanates. Small proportions of trifunctional polyols or isocyanates may additionally be used. The polyols and polyisocyanates usable in the synthesis of the prepolymers are known to a person skilled in the art.

The di- or triisocyanates known for adhesive applications are suitable according to the invention. Examples of suitable monomeric polyisocyanates are 1,5-naphthylene diisocyanate, 2,2'-, 2,4- and/or 4,4'-diphenylmethane diisocyanate (MDI), hydrogenated MDI (H12MDI), allophanates of MDI, xylylene diisocyanate (XDI), tetramethylxylylene diisocyanate (TMXDI), 4,4'-diphenyldimethylmethane diisocyanate, di- and tetraalkylene diphenylmethane diisocyanate, 4,4'-dibenzyl diisocyanate, 1,3-phenylene diisocyanate, 1,4-phenylene diisocyanate, the isomers of tolylene diisocyanate (TDI), 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (IPDI), chlorinated and brominated diisocyanates, phosphorus-containing diisocyanates, 4,4'-diisocyanatophenylperfluorethane, tetramethoxybutane 1,4-diisocyanate, butane 1,4-diisocyanate, hexane 1,6-diisocyanate (HDI), dicyclohexylmethane diisocyanate, cyclohexane 1,4-diisocyanate, ethylene diisocyanate, phthalic acid bis-isocyanatoethyl ester, trimethylhexamethylene diisocyanate, 1,4-diisocyanatobutane, 1,12-diisocyanatododecane, dimer fatty acid diisocyanate. Aliphatic isocyanates are particularly suitable, such as hexamethylene diisocyanate, undecane, dodecamethylene diisocyanate, 2,2,4-trimethylhexane-2,3,3-trimethylhexamethylene, 1,3- or 1,4-cyclohexane diisocyanate, 1,3- or 1,4-tetramethylxylene diisocyanate, isophorone diisocyanate, 4,4-dicyclohexylmethane, lysine ester diisocyanate or tetramethylxylylene diisocyanate (TMXDI).

Suitable trifunctional isocyanates are polyisocyanates which are obtained by trimerization or oligomerization of diisocyanates or by reaction of diisocyanates with polyfunctional compounds containing hydroxyl or amino groups. Isocyanates suitable for producing trimers are the diisocyanates which have already been mentioned above, the trimerization products of HDI, TMXDI or IPDI being particularly preferred.
In one particular embodiment, polyisocyanates with a uretidione, isocyanurate, allophanate, biuret, iminooxathiazinedione and/or oxadiazinetrione structure may be present.

The use of aliphatic isocyanates provides improved light stable adhesives, prepolymers based on aromatic isocyanates can be cured with longer wave length of the radiation source.

The PU prepolymers can be prepared from different polyols with a molecular weight of up to 50000 g/mol. For example they should be selected on the basis of polyethers, polyesters, polyolefins, polyacrylates or polyamides, it being necessary for these polymers additionally to comprise OH groups. Polyols which comprise terminal OH groups are preferred.

Polyesterpolyols which are suitable for the purposes of the present invention for producing the PU prepolymer may be obtained by polycondensation of acid and alcohol components, in particular by polycondensation of a polycarboxylic acid or of a mixture of two or more polycarboxylic acids and a polyol or a mixture of two or more polyols. Polycarboxylic acids with an aliphatic, cycloaliphatic, aromatic or heterocyclic parent substance are suitable as the polycarboxylic acid. Instead of the free carboxylic acids, it is optionally also possible to use the acid anhydrides thereof or the esters thereof with C1-5 monoalcohols for polycondensation.

A plurality of polyols may be used as diols for reaction with the polycarboxylic acids. Aliphatic polyols with 2 to 4 primary or secondary OH groups per molecule and 2 to 20 C atoms are suitable, for example. A proportion of more highly functional alcohols may likewise be used. Methods for producing such polyester polyols are known to a person skilled in the art and these products are commercially obtainable.

Polyether polyols may furthermore be used as polyol. Polyether polyols are preferably obtained by reacting low molecular weight polyols with alkylene oxides. The alkylene oxides preferably comprise two to four C atoms. The reaction products of ethylene glycol, propylene glycol or the isomeric butanediols with ethylene oxide, propylene oxide or butylene oxide are suitable, for example. Reaction products of polyfunctional alcohols such as glycerol, trimethylolethane or trimethylolpropane, pentaerythritol or sugar alcohols with the stated alkylene oxides to yield polyether polyols are also suitable. These may be random polymers or block copolymers. Particularly suitable polyether polyols obtainable from the stated reactions are those with a molecular weight of approx. 200 to approx. 20000 g/mol.

Polyacetals comprising terminal OH groups are likewise suitable as polyol. Further polyols based on polycarbonates or polycaprolactones may be selected.
Further suitable polyols may be produced on the basis of polyacrylates. These comprise polymers produced by polymerization of poly(meth)acrylic esters. Small proportions of other copolymerizable monomers may optionally also be present. The acrylates according to the invention should comprise two OH groups. These may preferably be present terminally in the polymer. Such OH-functional poly(meth)acrylates are known to a person skilled in the art.

A further suitable class of polyols comprises OH-functionalized polyolefins. Polyolefins are known to a person skilled in the art and may be produced in many molecular masses. Such polyolefins based on ethylene, propylene or longer-chain α-olefins as homo- or copolymers may be functionalized either by copolymerization of monomers containing functional groups or by graft reactions. Another possibility involves subsequently providing said base polymers with OH-functional groups, for example by oxidation.

A further class of polyols contains a polyamide backbone. Polyamides are reaction products of diamines with di- or polycarboxylic acids. Terminal OH groups may be introduced into polyamides by targeted synthesis.

The polyols suitable according to the invention for producing the PU prepolymers shall have a molar mass of between 200 and 30000 g/mol. In particular, the molecular weight should be less than 20000 g/mol. In the case of polyether polyols, the molecular weight should be between 200 and 20000 g/mol, in particular between 200 and 6000 g/mol. In the case of polyester polyols, the molecular weight should preferably be below 10000 g/mol, in particular between 600 and 2500 g/mol (number-average molecular weight, M_{N}, to be determined by GPC). In particular, linear polyether polyols, linear polyester polyols or mixtures thereof are suitable.

The reaction of the polyols with the polyisocyanates may proceed, for example, in the presence of solvents, but solvent-free processing is preferred. The temperature is conventionally increased, for example to between 40 and 150°C, to accelerate the reaction. Catalysts conventional in polyurethane chemistry may optionally be added to the reaction mixture to accelerate the reaction. For example dibutyltin dilaurate, dimethyltin dineodecanoate or diazabicyclooctane (DABCO) can be added. The quantity should amount to from approx. 0,001 wt.% to approx. 0,1 wt.% of the prepolymer.

Prepolymers are preferably produced from the above-mentioned polyisocyanates and polyols based on polyether and/or polyester diols. In particular, mixtures of both types of polyol should be used in the synthesis, for example with an amount of polyether polyol of 95 to 55 wt.%. A further particular embodiment uses polyether polyols which contain a proportion of ethylene oxide units of at least 50 wt.%. The resultant reactive PU prepolymers A) comprise 3 or preferably 2 NCO groups. They preferably comprise terminal NCO groups.

In a further reaction, a portion of the NCO groups is reacted with a component B) which bears a functional group which is capable of reacting with isocyanates and, as a further functional group, comprises a double bond crosslinkable by free-radical polymerization. These components shall have a molecular weight of less than 1500 g/mol. The NCO-reactive group is most preferably an OH-group.

Examples of such compounds are esters of α,β-unsaturated carboxylic acids with low molecular weight, in particular aliphatic, alcohols which additionally bear a further OH group in the alkyl residue. Examples of such carboxylic acids are acrylic acid, methacrylic acid, crotonic acid, itaconic acid, fumaric acid semiester and maleic acid semiester. Corresponding OH group-bearing esters of (meth)acrylic acid are for example 2-hydroxyethyl (meth)acrylamide, 2-hydroxyethyl (meth)acrylate, 2-hydroxypropyl (meth)acrylate, 3-hydroxypropyl (meth)acrylate, 3-hydroxypropyl (meth)acrylamide, N-hydroxyethyl (meth)acrylamide, reaction products of glycidyl ethers or esters with acrylic or methacrylic acid, for example reaction products of versatic acid glycidyl esters with acrylic or methacrylic acid, adducts of ethylene oxide or propylene oxide onto (meth)acrylic acid, reaction products of hydroxyacrylates with ε-caprolactone or partial transesterification products of polyalcohols, such as pentaerythritol, glycerol or trimethylolpropane, with (meth)acrylic acid.

The quantity of the OH-functional compound B) containing free-radically polymerizable double bonds is selected such that 20 to 95 mol% in particular up to 90 mol%, preferably 25 to 85 mol% are used relative to the NCO groups of the PU prepolymer. A preferred embodiment uses a mixture of methacrylates and acrylates, in which the proportion of acrylates constitutes at least 20 mol%, in particular at least 25 mol%, of the mixture.

The PU prepolymer is furthermore reacted with at least one component C) which comprises at least one isocyanate-reactive group and furthermore does not have another group polymerizable under free-radical conditions. Examples of such isocyanate-reactive groups are OH, SH or NHR groups. These components C) should have a molar mass of between 32 and 10000 g/mol, in particular between 40 and 4000 g/mol.

Suitable components C can be selected from monofunctional components for example low molecular weight substances including on OH, NH or SH-group. For example alcohols having 1 to 36 C atoms, such as for example methanol, ethanol, propanol and higher homologues can be used in the reaction. Another group of components useful as component C are low molecular weight diols or triols. If such components are used in excess to the NCO groups polyurethanes are prepared having free OH-groups. If triols are used at least partially non linear or branched polyurethanes are produced, having e.g. 3 to 4 arms. Suitable compounds are for example polyols with 2 to 44 C atoms, for example ethylene glycol, propanediol, butanediol and higher homologues. Another group of low molecular weight components are dihydroxy-monocarboxylic acids. If such components are reacted, polyurethanes having pendant carboxylic groups are prepared.

A low molecular weight component C shall have a weight of less than 250 g/mol or is of the polymeric type. Such polymeric component are for example monohydroxy-, monothio- or monoamino-functional polymers with a molecular weight of less than 10000 g/mol, in particular between 250 to 2000 g/mol. In particular the functional group shall constitute an OH group. Such components C can be used as single substance or as mixture for the modification of the prepolymers. By selection of the component C the molecular weight, the branching, the crosslinking or the polarity of the polyurethane backbone can be modified.

The quantity of the component C) is selected such that 5 to 80 mol% NCO-groups are reacted relative to all NCO groups of the PU prepolymer. The quantities are selected such that the sum of the component C) and the component B) bearing the radiation-reactive groups correspond to the quantity of total of the isocyanate groups (stoichiometric equivalence). A first embodiment of the invention includes a low molecular weight component C, comprising monofunctional components. In such case a portion of the polymer has polymeric arms, which are not further functionalized. In a different preferred embodiment, di-functional NCO-reactive compounds are used, the quantity being selected such that the OH:NCO ratio (of the remaining NCO-groups) amounts to 1,5 to 2,5:1, preferably to 1,6 to 2,2:1. In particular, the molar ratio should amount to 2:1 in case of a difunctional hydroxyl compound. In a third embodiment diols and triols are used as component C in an amount being equivalent to the remaining NCO-groups. In such case a branching of the polymer will result, providing polymers having three to four arms. In such case the polymers contain a plurality of unsaturated bonds, thereby increasing the crosslinking network.

The reaction methods for reacting the reactive PU prepolymers are known to a person skilled in the art. A reaction may be performed in a mixture, or the constituents are reacted in sequence. Randomly functionalized PU polymers are obtained after the reaction.

The PU polymer should have a molecular weight of less than 200000 g/mol, in particular of between 1000 and 100000 g/mol, preferably of between 2000 and 50000 g/mol, in particular of below 20000 g/mol. The PU polymer shall contain substantially no isocyanate groups, i.e. only traces of unreacted NCO groups should remain after the reaction. The quantity should be less than 0, 1 % (relative to the prepolymer).

Additionally, one or more photoinitiators capable of initiating the radical polymerization of olefinically unsaturated double bonds on exposure to light with a wavelength of about 300 to about 600 nm may be used, preferably form 350 to 410 nm. In principle, any commercially available photoinitiators which are compatible with the radiation-curable composition according to the invention, i.e., which form at least substantially homogeneous mixtures, may be used as photoinitiators for the purposes of the present invention. It is also desirable to select a photoinitiator that is low in volatility, does not discolor the cured composition following irradiation, and does not produce by-products capable of migrating through the substrate to which the radiation-curable composition is applied.

Suitable photoinitiators include, for example, phosphine oxide photoinitiators, benzoin alkyl ether photoinitiators, dialkoxyacetophenone initiators, aldehyde and ketone photoinitiators having at least one aromatic nucleus attached directly to the carbon atom of the carbonyl group, and alpha-hydroxyketone photoinitiators. The radiation-curable composition according to the invention may contain one or more photoinitiators in a quantity of 0 to 15% by weight, based on the composition as a whole.

A photoinitiator which on irradiation with UV-light is capable of initiating free-radical polymerization of olefinically unsaturated double bonds is used as a component of the hot-melt adhesive. For example, these are any Norrish type I fragmenting and Norrish type II substances. The quantity of photoinitiators should amount to up to 6 wt.% relative to the adhesive, in particular to between 1 and 4 wt.%. In a preferred embodiment, the photoinitiators should initiate the reaction on exposure to UV radiation or by visible radiation.

The hot-melt adhesive may additionally also contain proportions of reactive diluents. Suitable reactive diluents are in particular those compounds which comprise one or more functional groups which is/are reactive by irradiation with UV light or polymerizable with electron beam radiation.

Di-functional or more highly functional acrylate or methacrylate esters are in particular suitable. Such acrylate or methacrylate esters comprise for example esters of acrylic acid or methacrylic acid with aromatic, aliphatic or cycloaliphatic polyols or acrylate esters of polyether alcohols. Likewise suitable compounds are for example the acrylic acid or methacrylic acid esters of aromatic, cycloaliphatic, aliphatic, linear or branched C4-20 monoalcohols or of corresponding ether alcohols. Examples of such compounds are 2-ethylhexyl acrylate, octyl/decyl acrylate, isobornyl acrylate, 3-methoxybutyl acrylate, 2-phenoxyethyl acrylate, benzyl acrylate or 2-methoxypropyl acrylate, neopentyl glycol di(meth)acrylate, 1,6-hexanediol di(meth)acrylate, trimethylolpropane tri(meth)acrylate, pentaerythritol tetra(meth)acrylate, and (meth)acrylate esters of sorbitol and other sugar alcohols. These (meth)acrylate esters of aliphatic or cycloaliphatic diols may optionally be modified with an aliphatic ester or an alkylene oxide. The acrylates modified by an aliphatic ester comprise for example neopentyl glycol hydroxypivalate di(meth)acrylate, caprolactone-modified neopentyl glycol hydroxypivalate di(meth)acrylates and the like. Alkylene oxide-modified acrylate compounds comprise for example ethylene oxide-modified neopentyl glycol di(meth)acrylates, propylene oxide-modified neopentyl glycol di(meth)acrylates, ethylene oxide-modified 1,6-hexanediol di(meth)acrylates or propylene oxide-modified 1,6-hexanediol di(meth)acrylates, neopentyl glycol-modified (meth)acrylates, trimethylolpropane di(meth)acrylates, polyethylene glycol di(meth)acrylates, polypropylene glycol di(meth)acrylates and the like. Trifunctional and more highly functional acrylate monomers comprise for example trimethylolpropane tri(meth)acrylate, pentaerythritol tri- and tetra(meth)acrylate, dipentaerythritol tetra(meth)acrylate, dipentaerythritol penta(meth)acrylate, dipentaerythritol hexa(meth)acrylate, caprolactone-modified dipentaerythritol hexa(meth)-acrylate, pentaerythritol tetra(meth)acrylate, tris[(meth)acryloxyethyl] isocyanurate, ditrimethylolpropane tetraacrylate or caprolactone-modified tris[(meth)acryloxyethyl] isocyanurate or mixtures of two or more thereof.

The highly functional (meth)acrylates may comprise preferably 3 to 6 unsaturated groups. Most preferred the functionality is selected between 3 to 4, also mixtures of oligomers are possible. The amount of this component and its functionality may serve to increase the cross-linking density of the adhesive.

Auxiliary substances and additives which are additionally usable for the purposes of the present invention in the hot-melt adhesive include, for example, plasticizers, stabilizers, antioxidants, bonding agents, resins, polymers, dyes or fillers.

In one embodiment, the hot-melt adhesive used according to the invention contains at least tackifying resin. The resin brings about additional tackiness. In principle any resin may be used which is compatible with the hot-melt adhesive, i.e. which forms a largely homogeneous mixture. In particular these comprise resins which have a softening point of 70 to 140°C (ring and ball method, DIN 52011). These are for example aromatic, aliphatic or cycloaliphatic hydrocarbon resins, together with modified or hydrogenated versions thereof; modified natural resins such as resin acids from gum resin, tall oil resin or wood resin.

The plasticizers used are for example medicinal white oils, naphthenic mineral oils, paraffinic hydrocarbon oils, phthalates, adipates, polypropylene, polybutene, polyisoprene oligomers, hydrogenated polyisoprene and/or polybutadiene oligomers, benzoate esters, plant or animal oils and the derivatives thereof. Usable stabilizers or antioxidants which may be selected are phenols, high molecular weight sterically hindered phenols, polyfunctional phenols, sulfur- and phosphorus-containing phenols or amines. Pigments which may be selected are for example titanium dioxide, talcum, clay and the like.

Waxes may optionally be added to the hot-melt adhesive. The quantity should be adjusted such that adhesion is not negatively affected. The wax may be of natural or synthetic origin. Additives suitable according to the invention are commercially available.

The above-stated hot-melt adhesives are solvent-free and may be produced in known manner. They are suitable for the use according to the invention.

The adhesive processable according to the invention is a hot melt adhesive. It is solid at about 25 °C but shall have a viscosity of 2000 to 10000 mPas at 130°C (Brookfield viscosimeter, ISO EN 2555). The adhesive can be formed as pressure sensitive adhesive, having a permanent tack after application and crosslinking or it can be formed as hot melt adhesive having a tack free surface.

The radiation curable adhesive can be applied in a known manner. It shall be transferred in a molten form and can be applied by different means to the substrate, e.g. nozzles, rollers, blades, spray devices. According to the process of the invention the adhesive is applied in a layer of about 150 to 5000 µm, preferably from 250 to 750 µm. The thickness can be determined by measuring the applied amount of adhesive to a defined area, e.g. as g / m², wherein mass density of the adhesive is assumed as about 1 g/cm³. After application the adhesive can flow to the surface on the substrate thereby providing a good wettability of the substrate.

As next process step the adhesive layer will be finally crosslinked by radiation. This can be performed by radiation, e.g. EB-radiation, UV-radiation or also visible light, preferably by UV-A radiation. It is required that the radiation intensity is sufficient to cure the adhesive layer also in its inner or deeper parts. The radiation step can be performed on the warm adhesive layer or the layer is cooled. In each case the temperature emitted by the radiation source shall not decrease the initial bond of the adhesive layer or even degrade the substrate. Preferably the adhesive shall be transparent in the curing step which can be improved by keeping the adhesive in a homogenous state before cross-linking it, e.g. as warmed adhesive layer.

So as preferred embodiment the radiation source is a LED emitting UV or visible light. The known UV-lamps like mercury vapor lamps or Xenon arc lamps are not suitable due to the evaluation of heat. LED lamps provide sufficient light, as UV or visible, in a wave region of about 300 to 600 nm, preferably from 350 to 410 nm. The radiation source it chosen so that an energy of 0,1 to 10 W/cm² is provided. The duration of the radiation step to cross-link the film shall continue from 0,1 to 20 sec., preferably between 0,1 to 10 sec. After cross-linking the adhesive layer the substrates can be further processed as flexible layer of an adhesive applied on a support. If the wavelength is too short it is difficult to get a thick layer cured.

The process according to the invention can be applied to different substrates. The substrates can be formed of metals, also as metal film; polymers like films, e.g. selected from polyethylene (including LDPE, MDPE, HPDE, LLDPE), polypropylene (PP including OPP, CPP), polyesters (PET, PBT) ethylene-copolymers (like EVA, EAA, EMA), polyvinyl chloride (PVC), polycarbonates (PC), acrylonitrile-butadiene-styrene polymers (ABS), and acrylonitrile copolymers (AN); natural fibers, like paper, cardboard also as printed surface or other substrates as composite materials.

A particular embodiment of the invention is the use of the process in the bookbinding industry. As example the spine of a book is manufactured and the book block is cramped together. To the surface an adhesive as disclosed hereunder is applied in an amount forming a layer of about 0,2 to 1,5 mm. This layer is immediately passed under an UV-LED lamp, which provides UV light. Within a short period of time the spine is irradiated and the adhesive layer is cured. The book can be further processed thereafter.

Another embodiment of the invention is the use of a process to manufacture a pressure sensitive adhesive (PSA) layer for tapes. In this application the known substrates for tapes e.g. flexible film forming materials can be used. On the film a layer according to the invention is applied and subsequently crosslinked. The adhesive can be manufactured as PSA type film. In a following step it is possible to cover the surface of the layer with a release liner which can be easily removed from the adhesive prior to use. Or the adhesive tape is wound so that the adhesive surface is covered by the second surface of the tape which is if necessary coated or finished so that it is only weakly adherend to the adhesive and can be peeled off prior to use.

The present invention also provides the use of such hot-melt adhesives with radiation-crosslinked functional groups, which are suitable for adhesively bonding labels to containers. The present invention also provides the use of such hot-melt adhesives for coating articles for medical use with pressure-sensitively adhesive layers. The invention also provides a film forming material comprising a thick layer of a PSA according to the invention which can be used in the construction industry, e.g. for roofing purposes. The advantage of the process according to the invention is the possibility of manufacturing thick layers of adhesive which are fully cured also on the lower side of the layer. So the cohesive force in the layer is improved. A further advantage is the flexibility and softness of the adhesive. This can be achieved even with a reduced amount of plasticizers, so that no exudation or migration of the adhesive to the substrates is observed. The process of the invention further allows to coat substrates with adhesives wherein the substrate is sensitive to heat. By using a radiation curing system and a specific UV-source the thermal stress to the substrates can be reduced.

### Example procedure:

A reaction vessel is used comprising a stirring device, a vacuum pump and a heating bath. To this vessel all parts are added (except no 8) and stirred under reduced pressure and heating for drying. Component 8 is added and the reaction takes place at 120 °C (to be maintained by heating or cooling). In a next step components 9,10, 11 are added and the reaction mixture homogenized and reacted to an NCO content of less than 0,1 % .

A PU prepolymer is prepared by reacting the following materials (the amount stated for each component is in parts by weight):

| component | polymer 1 g | polymer 2 g | polymer 3 g | |
|---|---|---|---|---|
| PPG 2000 | 125 | 119 | | OH-value 61 |
| PPG 1000 | | | 150 | OH-value 101 |
| PE 218 | 50 | 48 | 60 | OH-Value 140 |
| Dynacoll 7360 | 250 | 238 | 300 | OH-value 30 |
| Dymacoll 7380 | 75 | 71 | 90 | OH-value 31 |
| DMPA | | 26 | | Dimethylol propionic acid |
| stabiliser | 3 | 3 | 3 | |
| MDI | 77 | 138 | 111 | 4,4'-MDI |
| Anti oxidant | 2 | 2 | 2 | |
| HEMA | 16 | 29 | 23 | Hydroxyethyl-methacrylate |
| Oleyl-alcohol | 15 | 26 | 21 | |
| | | | | |
| Viscosity | 8200 | 5800 | 6300 | at 130°C |

### Formulations: The polymer was blended with the initiator and the crosslinker

Films are casted with a thickness of about 230 µm and irradiated for 1 - 2 sec. using a UV-lamp (380 nm, 200 mW/cm²)
Dumbbell shaped test specimens are cut from the cured film and tested.

| | example 1 | example 2 | example 3 | |
|---|---|---|---|---|
| Polymer 1 | 98% | 97,5% | 97,0 % | |
| Irgacure 819 | 2% | 2% | 2% | |
| polyacrylate crosslinker | 0 | 0,5 % | 1,0 % | |
| | | | | |
| Elongation | 370 | 300 | 310 | % |
| Yield | 300 | 4,1 | 3,8 | N/mm² |
| Tensile strength | 9,5 | 3,8 | 10,0 | N/mm² |
| | | | | |

A collection of about 200 sheets was bundled having a spine of about 1 cm.
The spine was coated with the adhesive at 130 °C, the layer having a thickness of 300 µm Immediately the layer was cured by UV-radiation (UV-LED, 380 nm).
Directly after curing the film a hard paper was pressed against the adhesive layer.

After 7 h the cover paper was pulled apart. Fiber tear was observed.
The book was opened, the adhesive holds the pages together.
The adhesive layer was pulled from the spine. Fiber tear was observed.

## Claims

1. A process to manufacture an adhesive layer, whereby the adhesive is applied in a molten state to a substrate in an amount to form a layer of 150 to 5000 µm and the adhesive is cured by UV-radiation **characterized in that** the adhesive comprises a polyurethane polymer having at least one unsaturated curable group.

2. A process according to claim 1, **characterized in that** the PU polymer contains as unsaturated group (meth)acrylate-groups and additionally non-reactive chain ends.

3. A process according to claim 1 or 2, **characterized in that** the adhesive comprises 0,5 to 5 wt-% of a free- radical photoinitiator.

4. A process according to claim 1 to 3, **characterized in that** the backbone of the polyurethane comprises 2 to 3 arms and less than 25 % of the arms are non radically reactive substituted.

5. A process according to claim 1 to 4 , **characterized in that** the adhesive comprises 1 to 25 wt-% poly-unsaturated components, having a molecular weight (M_{N}) of less than 2000 g/mol and a functionality of 3 to 6.

6. A process according to claim 1 to 5, **characterized in that** the UV-radiation is emitted by an LED UV-source in the range from 300 to 600 nm, preferably from 350 to 410 nm.

7. A process according to claim 1 to 6, **characterized in that** the adhesive has a viscosity of about 1500 to 30000 mPas at 130 °C.

8. A process according to claim 1 to 7, **characterized in that** the PU-polymer is applied as adhesive in bookbinding and is a non PSA (pressure sensitive adhesive).

9. A process according to claim 1 to 7, **characterized in that** the adhesive layer is applied to flat substrates and is a PSA.

10. A process according to claim 9, **characterized in that** adhesive is applied on flexible films.

11. An adhesive layer in which the adhesive comprises a polyurethane having at least one unsaturated polymerizable group, the backbone of the polyurethane comprises 2 to 3 arms and as average less than 25 % of the arms are non reactive substituted, **characterized in that** the layer has a thickness of 150 to 5000 µm and is cured by UV-radiation.

12. An adhesive layer according to claim 12, **characterized in that** the adhesive comprises 0,1 to 25 wt-% of poly-unsaturated components, having a molecular weight of less than 2000 g/mol and a functionality of 3 to 6.

13. An adhesive layer according to claim 11 or 12, **characterized in that** it is manufactured in a process according to one of claims 1 to 10.

14. An adhesive layer according to claim 11 to 13, **characterized in that** the layer forms a pressure sensitive adhesive.
